# EUROPEAN PATENT APPLICATION

(11) **EP 3 671 495 A1**
(43) Date of publication of application: **24.06.2020**
(21) Application number: 18215335.3
(22) Date of filing: 21.12.2018
(51) Int. Cl.: G06F 21/10, G06F 21/62

(54) **METHOD AND SYSTEM FOR SECURE DATA SHARING**

(71) Applicant: Siemens Aktiengesellschaft, 80333 München (DE)
(72) Inventor: BERTRAND, Jan, 91058 Erlangen (DE); ENGLER, Romana, 80538 München (DE); FLACH, Bence, 1143 Budapest (HU); HAACK, Martin, 90768 Fürth (DE); LOEBEN, Markus, 91077 Dormitz (DE); SERTL, Daniel, 95506 Kastl (DE); CANPOLAT, Baris, 52062 Aachen (DE)

(57) **Abstract**

A data sharing processing system (10) for sharing data between platform participants (A; B; C) of said data sharing processing system (10),
said data sharing processing system (10) comprising for each platform participant (A, B, C) an application account interface (10, 20, 70) connected to a cloud computing platform (40), said application account interface (10, 20, 70) including:
a data modelling module (230, 330, 730) adapted to model data of a platform participant and to stream the modelled data directly or indirectly via a database (80) of said data sharing processing system (10) to a data storage module (210, 310, 710) of another application account interface (10, 20, 70) of said data sharing processing system (10) and
including a token account module (250, 350, 750) adapted to receive directly or indirectly via a token exchange unit (82) of said data sharing processing system (10) tokens from a token account module (250, 350, 750) of the other application account interface (10, 20, 70) of said data sharing system (10) .

## Description

The invention relates to a method and system for secure data sharing using a cloud platform.

Currently, data on-boarded in a cloud computing environment or other storage and network systems is solely available to the owner or holder of an account in the cloud/storage system. Usually the exchange of data between accounts of different owners needs manual processing such as exporting and importing or administration processing for defining rights and roles to provide access to the data. Therefore, there is no automatic connection between the accounts of different owners (in one cloud computing environment or in different cloud computing environments) and it is difficult to publish data in an efficient way using a platform interface such as a marketplace for advertising and/or offering it to other persons/companies/customers, etc. who might have an interest in such data. Furthermore, it is difficult to exchange data between accounts in a cloud computing environment.

However, data has a value so that sharing and payment solutions or other forms of incentive or beneficial solutions are of interest in private and public sectors. Sharing and exchanging data is already becoming a mutually beneficial exercise which boosts innovation for organisations from public and private sectors and creates entirely new revenue streams of data for business. Furthermore, new disruptive technologies such as machine-to-machine interactions begin to take shape. In the future, most devices will become smart and autonomous devices connected with each other in a cloud computing environment.

However, without data integrity, validated records of events, and authenticated and known actors there will be no trust and such systems and operation models will fail. For the exchange of data between several participants it is important to rely on the integrity, security and privacy of shared data. Furthermore, for seamless machine-to-machine transactions a real time value transfer is required.

Accordingly, it is an object of the present invention to provide a method and system for enabling secure sharing of data in a computing environment.

The method provides according to a first aspect a computer implemented method for providing a secure data transfer between application account interfaces of participants in a processing system,
the method comprising the steps of:
modelling by a data modelling module of a first application account interface data of a participant of said processing systems;
streaming the modelled data from the data modelling module of the first application account interface directly or indirectly via a database of said processing system to a data storage module of a second application account interface of another
participant of said processing system in response to a received request, R; and;
transferring tokens from a token account module of the second application account interface directly or indirectly via a token exchange unit of said processing system to a token account module of the first application account interface of said processing system.

In a possible embodiment of the computer implemented method according to the first aspect of the present invention, the first application module sends an information message including metadata describing the data modelled by the data modelling module of the first application account interface to at least one platform interface module of said processing system to offer the modelled data for sharing with other participants of said processing system.

In a further possible embodiment of the computer implemented method according to the first aspect of the present invention the metadata of the information message describing data modelled by the data modelling module of the first application account interface is evaluated automatically to determine whether the respective modelled data is relevant to at least one other participant of said processing system.

In a still further possible embodiment of the computer implemented method according to the first aspect of the present invention if data modelled by the data modelling module of the first application account interface is determined to be relevant and/or demanded by another participant of said processing system a corresponding request, REQ, is generated and the modelled data is streamed to the second application account interface of the identified other participant in exchange of tokens transferred directly or indirectly from the token account module of the second application account interface to the token account module of the first application account interface.

In a further possible embodiment of the computer implemented method according to the first aspect of the present invention modelling of the data comprises combining and/or preprocessing data derived from assets of a platform participant of said processing system and/or encrypting the data derived from assets of the respective participant of said processing system using an encryption key associated with the respective platform participant and/or associated with the respective asset of the platform participant.

In a further possible embodiment of the computer implemented method according to the first aspect of the present invention after the transfer of tokens from the token account module of the second application interface to the token account module of the first application account interface has been accomplished a decryption key is supplied automatically to the second application account interface and used to decrypt the data having been modelled and encrypted by the data modelling module of the first application account interface and streamed directly or indirectly to the data storage module of the second application account interface.

In a further possible embodiment of the computer implemented method according to the first aspect of the present invention the database comprises a central database or a distributed ledger.

In a further possible embodiment of the computer implemented method according to the first aspect of the present invention the distributed ledger is configured as a distributed permissionless ledger, such as a IOTA™ tangle and/or as a blockchain.

In a still further possible embodiment of the computer implemented method according to the first aspect of the present invention the internal platform interface module comprises an application logic for receiving requests and/or comparing requests with metadata carried in information messages.

In a still further possible embodiment of the computer implemented method according to the first aspect of the present invention the received decryption key is stored in the second application account interface and used for decrypting the encrypted data received from the first application account interface and/or received from the database of said processing system.

In a still further possible embodiment of the computer implemented method according to the first aspect of the present invention the decrypted data is stored and used as training data to train a machine learning data model implemented on a processor connected to the second application account interface.

In a still further possible embodiment of the computer implemented method according to the first aspect of the present invention the metadata comprises tags and/or annotations provided to label the training data used for supervised learning of the machine learning data model.

In a further possible embodiment of the computer implemented method according to the first aspect of the present invention each data modelling module comprises an application semantic model used for mapping of terms of data elements, in particular data source terms, event source terms and/or for mappings between different information terms.

The invention further provides according to a further aspect a data sharing processing system for sharing data between platform participants of said sharing processing system, said data sharing processing system comprising for each platform participant an application account interface connected to a cloud computing platform, said application account interface including:
a data modelling module adapted to model data of a platform participant and to stream the modelled data directly or indirectly via a database of said data sharing processing system to a data storage module of another application account interface of said data sharing processing system and
including a token account module adapted to receive directly or indirectly via a token exchange unit of said data sharing processing system tokens from a token account module of the other application account interface of said data sharing system.

In a possible embodiment of the data sharing processing system according to the second aspect of the present invention the data sharing processing system is used to share data between automation systems of different platform participants.

In a still further possible embodiment of the data sharing processing system according to the second aspect of the present invention the data sharing processing system is used to share health related data between a plurality of platform participants.

The method and system according to the present invention creates an efficient solution for the above-mentioned deficiencies by enabling on-boarded data to be published to a cloud platform. The data can comprise sensor data from a single measurement performed by a sensor, image data from medical devices or the combination of various data points from an industrial plant or production facility. This is realized by a software application of the cloud platform. The data can be securely shared in return for tokens by using a database which is preferably configured as a distributed ledger. A transaction system is established by exchanging tokens providing an incentive to share and transfer data from one application account interface to another application account interface.

In the following possible embodiments of the different aspects of the present invention are described in more detail with reference to the enclosed figures.
- FIG 1: shows a diagram for illustrating one example of the overall system structure, including relation-ships between and among certain system components and participants, and illustrating the flow of data and computing resources through the system;
- FIG 2,3: show flowcharts of a possible exemplary embodiments of a method for providing a system for secure data transfer and sharing between application account interface of several platform participants according to a further aspect of the present invention.

The following description is presented to enable a person skilled in the art to make use of the various embodiments. Descriptions of specific devices, techniques, and applications are provided only as examples. Various modifications to the examples described herein will be apparent to those of ordinary skill in the art, and the general principles defined herein may be applied to other examples and applications without departing from the spirit and scope of the present technology.

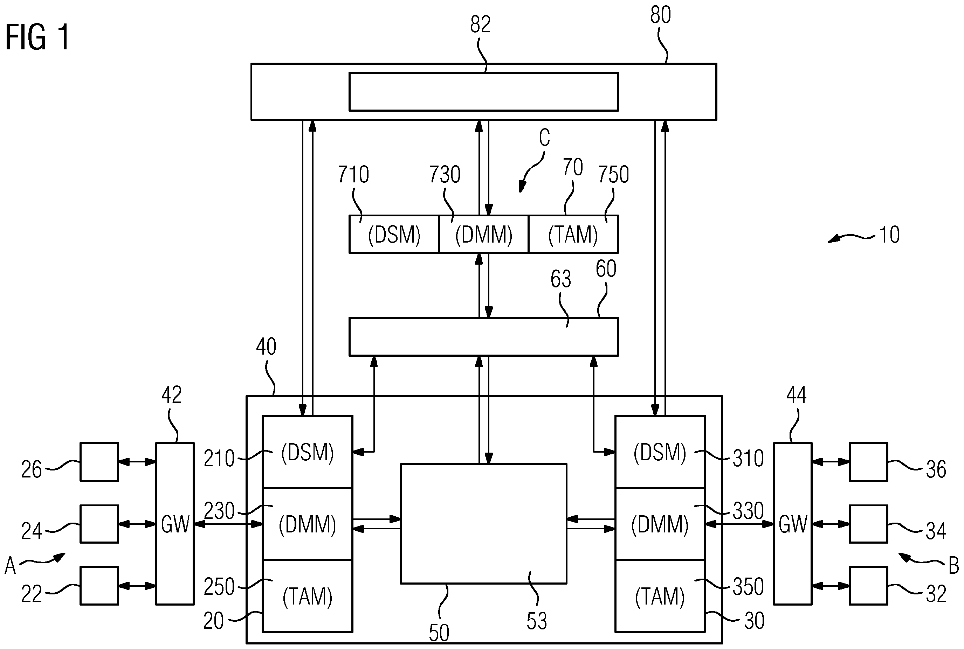

FIG 1 shows schematically a possible exemplary embodiment of a data transfer and sharing processing system 10 according to an aspect of the present invention. The data sharing processing system 10 as illustrated in FIG 1 can be used to provide a secure data transfer between client devices of participants and can also be used for sharing of data by different participants. The processing system 10 further provides to perform transactions based on transferred and/or shared data. These transactions can comprise clearing and/or payment and/or incentive transactions based on data of industrial systems of different participants (customers) A, B,...,. However, the processing system 10 can also be used for processing data of participants in other domains in private and/or public sectors, such as the healthcare domain. The platform participants A, B,..., can be manufacturing companies operating in the same technical domain. For instance, the platform participants can be different automotive companies using similar manufacturing processes to produce vehicles. However, the cloud platform participants A, B,..., can be also patients using the same medicine and/or sharing health related data.

As illustrated in the schematic block diagram of FIG 1, the data transfer and data sharing processing system 10 according to the present invention comprises at least a first application account interface 20 adapted to provide data from a participant A such as data derived from manufacturing assets or data sources 22, 24, 26 of the participant A, and at least a second application account interface 30 adapted to provide data from a participant B such as data derived from assets 32, 34, 36 of this participant B. These assets can provide sensor data but also provide any other kind of data such as text data, calculation data, etc. The data provided by the assets 22, 24, 26 are supplied to the application account interface 20 of participant A and data generated by the assets 32, 34, 36 are supplied to the application account interface 30 of participant B. In case that the application account interfaces 20, 30 form part of a cloud computing platform 40 the data from the assets 22, 24, 26 of participant A and the assets 32, 34, 36 of participant B can be transferred to the application account interfaces 20, 30 by using gateways 42, 44 of the participants A, B.

Each application account interface 20, 30 comprises in a possible embodiment a data storage module (DSM) 210, 310, a data modelling module (DMM) 230, 330, and a digital token account module (TAM) 250, 350.

For participant A being owner of the application account interface 20, the data received via the gateway 42 are stored in the data storage module 210. The data modelling module 230 is adapted to process and model the data stored in the data storage module 210. The data modelling module 230 may process the data to determine whether the data have a value or technical relevance for another participant B being owner of the application account interface 30 (and/or any other owners in the complex cloud environment). The data modelling module 230 is configured to translate different tags of the data in order to categorize the data in case of using different names for the same type of data. In a further embodiment, each gateway 42, 44 can comprise a pre-validation moduleto determine which data generated or provided by the assets 22, 24, 26 of participant A are of interest or are relevant for sharing with other participants of the data transfer processing system 10. It is also possible that a specific decision and evaluation module is implemented in a further embodiment for the classification and evaluation of the data in order to decide if they have a sufficient technical relevance or value so that they may be advertised or offered to third parties. In case that the data modelling module 230 - or as explained another module or software application - determines or detects that the generated and/or processed and/or stored and/or received data has an intrinsic value and/or technical relevance and can be offered to be shared with third parties, an information message is sent to an internal platform interface module 50 and/or to an external platform interface module 60. The information message is a notification regarding the offered and/or advertised data and does comprise metadata in respect to the preprocessed data and/or original data to be offered for sharing them with other cloud participants.

The external platform interface module 60 is linked with an external application account interface 70 of another participant such as a company and/or organization and/or customer. The application account interface 70 comprises a data storage module 710, a data modelling module 730 and a digital token account module 750. It is also possible that the application account interface 70 of a third party comprises only a data storage module 710 and a digital token account module 750.

A technical or other relevance of sensor data provided by an asset of a first participant A can be for example that the sensor data can be used to train an artificial neural network (ANN) of another platform participant B. Data of the first participant A may also be used by another platform participant B as input data to a processor performing optimization of production control processes in a factory or any other technical facility of participant B. The technical relevance of published data (e.g. sensor data) to be shared can be detected in a preferred embodiment automatically in response to a request, R, in particular to a request received from an application account interface 20, 30 of another participant (customer)of the processing system 10. In a possible embodiment, an automatic matching or mapping between data of a specific type offered by a first participant A and data of a specific type required by a second participant B can be performed by a matching unit. The matching unit can be implemented in a processor of the platform interface modules 50, 60 to perform a matching algorithm. The matching can e.g. be performed automatically on the basis of time stamps and/or data tags and/or protocol structures of the offered data and the demanded data or datasets. For instance, sensor data generated in a specific area or geolocation at a specific time or within a specific time period and/or generated by a specific type of sensor can be offered or published by a cloud platform participant A and requested by another cloud platform participant B for feeding an application program or for performing machine learning ML of machine learning algorithms. The exchange and/or sharing of data via the platform interface modules 50, 60 of the cloud platform 40 can take place in a possible embodiment on the fly in near real time.

In the same way as the data modelling module 230, 330 of the application account interface 20, 30 also the data modelling module 730 of the application account interface 70 can advertise and/or offer its data at the platform interface modules 50, 60 of the processing system 10.

The other participants B, C can access an application executed by the platform interface modules 50, 60 which can both comprise an application logic 53, 63 to process and administer requests R from the participants B, C regarding the advertised or offered data from participant A. The application logic 53, 63 can comprise in a possible embodiment a request analysis application for processing the customer requests R and it can be determined by a request processing unit whether the data for responding to the request R is available in the data modelling module 230 and/or data storage module 210 of participant A. In case that the required data are available and one of the participants B, C has an interest to get the data, the data are transferred securely to a central or distributed database 80 of the processing system 10. In another embodiment it is also possible that the data has been already transferred to the database 80 when the data modelling module 230 of the application account interface 20 of participant A has decided to offer this data. In a further embodiment the data storage module 210 of participant A can form part of the database 80. These are several possibilities to design and implement storage solutions for the data of participant A but also for the other participants B, C. The data are securely stored using encryption technologies so that the integrity of the data is ensured: A data receiving participant such as participant B of data originating from participant A can rely on the integrity of the received data and knows that he exactly gets the desired data by the exchange of tokens.

For the receipt of the data the participant B, C can return a defined number of tokens to participant A. The participants, customers or users can be e.g. manufacturing companies. In case that company A receives tokens from participants B, C, the data are transferred from the database 80 to a data storage unit of companies B, C, in particular to the data storage modules 310, 710 of their respective application account interfaces 30, 70. The tokens to be transferred to participant A are transferred from the digital token account modules 350, 750 of the platform participants B, C to a token exchange unit 82 of the database 80. It is also possible, that the digital account modules 350, 750 send a request to transfer a negotiated and/or calculated number of tokens from the token exchange unit 82 to the digital token account module 250 of participant A. In a further embodiment, the digital token account module 250 of participant A receives only a notice or message indicating a transfer of tokens in the token exchange unit 82 to his/her associated token account. Several possibilities for designing appropriate software solutions are in the scope of the present invention.

In case that the other platform participants B, C do not return further tokens to the data offering platform participant A the automatic transfer of data is automatically terminated. By implementing a digital token account module 250, 350, 750 into the application account interfaces 20, 30, 70 of all platform participants A, B, C, who participate on the platform interface modules 50, 60 an automatic exchange of tokens for offered data can be enabled.

The term token in this context means metadata that defines a digitally transferable item. That is, an item can be transferred from one unit of the platform of the processing system 10 to another. Like a physical item, the recipient (token receiving participant) takes ownership of one or more the tokens and the sender (token sending participant) surrenders control over the one or more tokens to the recipient. The token can comprise an item of a crypto currency.

In a possible embodiment the token transfer takes place after the data transfer by means of the data stream has been accomplished. In an alternative embodiment the token transfer takes place before the data stream is initiated. In a still further embodiment the data transfer and token transfer is performed in parallel i.e. simultaneously. The token transfer is performed via a secure channel of the system.

A situation where this analogy applies is digital currency schemes, such as Bitcoin. However, any other cryptocurrency can be used, but also actual currency (dollars, euros, etc.) can be converted automatically into a number of tokens referred to as bitcoins. Furthermore, a token may represent any other kind of asset. The tokens are stored in the digital token account modules 250, 350, 750 of the platform participants A, B, C and are transferred by using the database 80. However, in a further embodiment the database 80 can also be incorporated in the data storage modules 210, 310, 710 of the application account interface 20, 30, 70 of the platform participants A, B, C.

In a further embodiment, the database 80 may define a distributed ledger and/or a distributed permissionless ledger. An example for a distributed ledger is a blockchain, and an IOTA™ tangle is an example of a distributed permissionless ledger. Unlike a traditional ledger, which may be centralized or commonly owned, the distributed ledger such as an IOTA™ tangle or a blockchain uses various nodes/computer in a network. A decentralized accounting ledger facilitates value or token transfer without a trusted third party so that identities of the participants forming parties in the performed transactions are either pseudonymous or anonymous. This makes this concept attractive for machine-to-machine communication or data exchange e.g. in the healthcare industry which is explained in more detail in the following as the integrity and the security of the data is ensured.

For a secure transmission of data from an application account interface 20, 30, 70 to the database 80 a protocol for encrypting and streaming the data is used. Furthermore, in an advantageous embodiment a data base structure such as an IO-TA™ tangle can be used for the database 80. As explained, an IOTA™ tangle has the advantage of using a permissionless distributed ledger. Another possibility is the use of a blockchain. The encrypted streamed data can be offered to any other participant, organization or user A, B, C, ... who has implemented the protocol of the IOTA™ tangle or the blockchain in its computing structure and environment.

An IOTA™ tangle is a distributed data storage protocol and provides advantages such as peer-to-peer transactions without intermediaries or fees so that secure, scalable and feeless transactions can be performed. An IOTA™ tangle does not consist of transactions grouped into blocks and stored in sequential chains but is a stream of individual transactions entangled together.

In response to an exchange of one or more tokens the data offered by participant A (receiving tokens) are transferred to participants B, C receiving the data and forming the recipients of the data. Furthermore, the data receiving participants B, C receive a decryption key for decrypting the received encrypted data. Encryption protocols such as private-public key solutions can be used. The decryption key can be transferred by the platform interface module 50, 60 but also by the database 80 and/or by the token exchange unit 82 to the data receiving participants B, C and used to decrypt automatically the received encrypted data.

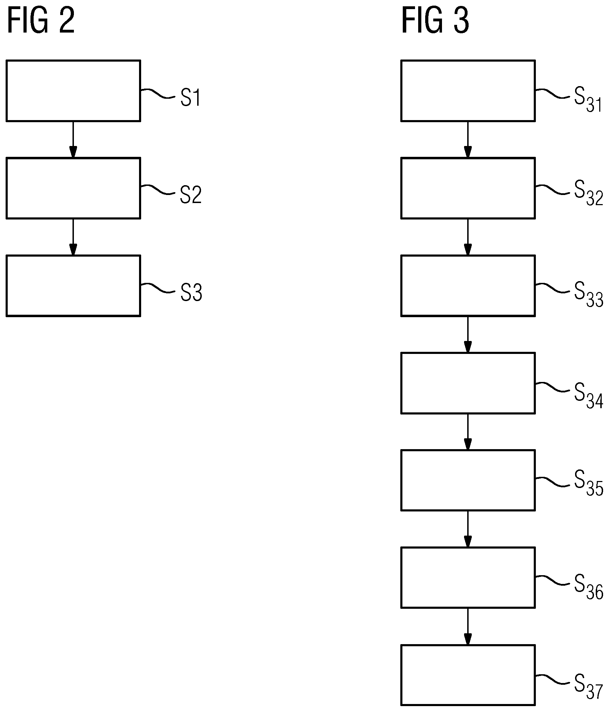

FIG 3 shows a flowchart of a possible exemplary embodiment of a method for providing a system for secure transferring data between different cloud platform according to an aspect of the present invention. In the illustrated embodiment the method comprises several main steps.

In a first step S31 data are modelled and can be encrypted with an encryption key EK by a data modelling module 210 of at least one first application account interface 20 of a first platform participant A. The data is encrypted using an encryption key EK associated with the respective participant and/or asset.

In a further step S32 at least one information message regarding the encrypted data is sent to at least one platform interface module 50, 60 of the processing system 10.

In a further step S33 at least one request R from at least one second application account interface 30 of another platform participant B regarding the processed data is received at the platform interface modules 50, 60 of the processing system 10.

In a further step S34 the encrypted and/or modelled data can be streamed to at least one central or distributed database 80 of the processing system 10.

In a further step S35 the encrypted data is streamed automatically from the database 80 to at least one data storage module 310 of the second application account interface 30 of the platform participant B.

In a further step S36 tokens from at least one digital account 350 of the second application account interface 30 are sent to a token exchange unit 82 of the processing system 10.

In a further step S37 the tokens are sent from the token exchange unit 82 to the at least one digital account module 250 of the first application account interface 20 of the platform participant A.

In the following some possible use cases of the method and system according to the present invention are described:
The owner of the second application account interface 30 can be in a use case an operator of a plant B requiring to receive information about the usage of a pressure sensor 26 of another plant operated by platform participant A. This pressure sensor 26 is installed in various sites and plants A, ...,N around the world and it is of interest for participant B to know more about the general behaviour of a special pump which is monitored by the pressure sensor 26. It might be that e.g. thousand pressure sensors 26 from two hundred different plants A, ..., N are streaming data including sensor data to the cloud computing platform 40 of the processing system 10. An example of such a cloud computing platform is Mind-Sphere®. Each plant A, B, ... is mapped in the cloud computing platform 40 as an associated application account interface 20, 30, 70, .... Furthermore, all plants A, B, C, ..., are streaming every second data from a new pressure measurement of the respective sensors 26 to the cloud computing platform 40. Some of the account owners or participants A, B, C, ... would like to offer their data for use by other platform participants and publish their availability and e.g. price (or required token) at the platform modules 50, 60.

The data generated by pressure sensor 26 at plant A can be advertised or offered for sharing by using the application logic 53 and/or other processing application modules. This advertisement or notification including metadata is visible internally for other platform participants A, B, ... of the cloud computing platform 40. In an advantageous embodiment these platform participants A, B, ...have permission rights to get access to such advertisement information or notification messages including metadata. Such permission rights can be allocated to participants by using smart contracts deployed on a managing module of the cloud platform 40. The smart contracts can comprise rules to be applied automatically when data are transferred as well as exchange rates between transferred or shared data volumes and tokens.

Furthermore, this advertisement can be also visible externally for other participants C of the cloud computing environment 40. In an advantageous embodiment these participants C have also assigned permission rights to get access to such advertisement information or published metadata. Such permission rights can be allocated to participants also by using smart contracts. In case of using a distributed permissionless ledger such as a tangle of IOTA™ the availability of the data stream is written publicly to the ledger and can be advertised on an externally reachable website.

If the account owner or participant (plant) A decides to offer its data for sharing with other participants, an encrypted data stream can be pushed to the database 80 comprising the measurement values or sensor data, device information, etc provided by sensor 26 implemented in the plant of participant A.

In a further embodiment, the data modelling module 230 may combine the sensor data generated by a sensor with other data such as weather data. This combined data can then be transferred or streamed in datasets to the database 80 of the processing system 10. Combining data of different assets of a participant can provide a complex data stream being of a higher technical relevance for another participant, in particular may be used as training data. The combined complex data stream mixed or multiplexed from different data sources can comprise tags or annotations provided by a platform participant thus offering e.g. labelled training data for other users.

Another participant B connected to the second application account interface 30 having read or received the advertisement information and/or metadata regarding the sensor data and/or combined data on the platform module 50 can decide to get the pressure measurement sensor data from the pressure sensor 26 operated by the account owning participant A operating the plant in exchange for one or more tokens. After the decision to get the sensor data or combined data, tokens for sharing the sensor data are transferred from the digital token account module 350 of participant B to the token exchange unit 82 of the database 80. In an advantageous embodiment, the transfer of the data of participant A to the data storage module 310 of the second application account interface 30 of participant B starts at the same time when the tokens are sent to the token exchange unit 82 of the database 80 and stops after all required data have been transferred and a corresponding number or amount of tokens have been returned. Furthermore, at least one or more decryption key(s) DK for decrypting the encrypted data received from the database 80 is sent to participant B. The trigger for sending the decryption key DK is initiated by registering of a sufficient number of incoming tokens from the digital token account module 350 of the second application account interface 30 of participant B.

The streaming of tokens and data terminates automatically if an account owner, such as participant B decides not to trust the received data stream and/or does not return further tokens to the digital account module 250 of the data offering account owner A. Another reason to terminate streaming can be that all available data have been sent and the data stream has become inactive.

In the described use case the data modelling module 230, 330 is not very complex as it does provide only the data generated by one sensor 26. However, the data modelling module 230, 330 can be quite complex for example in a production facility with lots of information and data sources including cycle-times, process interactions and physical set-ups including process parameters. However, also quite complex data structures can be handled and the described embodiment is only an example and more complex scenarios are covered by the present invention.

In a further embodiment, a sensor or data source 26 itself can comprise his own associated digital account and can stream the generated sensor data directly to the database 80 and advertise simultaneously its generated sensor data at the platform modules 50, 60. The sensor 26 or a further connection hub can push the generated data to the database 80.

The tangle of IOAT™ is an example of a permissionless database. However, also a permissioned database can be used as a storage for the data including a further processing application interface which is able to receive the data and send the data.

Instead of using tokens defined by the processing system 10 it is possible to implement an administration backend system which enables to exchange tokens in a valid real currency or cryptocurrency.

The data transfer and token exchange system 10 can be used for getting and offering data for predictive maintenance which is especially a requirement for machines and equipment of high value and high investments (e.g. in an automation system). However, for new and rapidly evolving equipment it is often difficult to collect enough data to make reliable predictions. In this context it is beneficial to share data from many clients of the manufacturer of the machine/ equipment as possible in order to perform a better maintenance. By using the method of the present invention data from different data sources can be shared anonymized so that the availability of a bigger data pool is achieved. By automated token transfer and automated contract negotiation a better support for clients and participants can be provided. Especially it is possible that machines can directly access data from other machines to optimize their operating and maintenance models.

Healthcare data as another use case has traditionally been siloed in different institutions or even within a single institution such as different pharmaceutical companies, health care insurance companies and hospitals. These conventional use of data silos prevents meaningful sharing and reuse of data and limits the quality of healthcare that can be delivered. To receive medical treatment, an individual may need to consult multiple providers for a single incident. When individuals transition from primary care clinics to hospitals to specialists and back again, records are not shared seamlessly, reducing their continuity of healthcare.

This means, health data of individual persons including imagery and other health records are currently distributed across different data silos and not easily accessible by the individuals or other parties. In addition to the health data taken by medical institutes the individual may have health tracking devices (like smart watches) and fitness trackers to monitor and store their health status and progress.

All this data is scattered across different data silos and is yet not always digitally available which makes it virtually impossible to start big data diagnostics with those data. In addition, the individual which holds the data has no possibility to exploit his/her own health data and therefore has no incentive to publish it on a data market or platform.

According to the present invention, a participant A such as a medical institute can upload securely the data of an individual person or patient to their application account interface 20 and/or the database 80. In an advantageous embodiment the data are automatically encrypted with a unique encryption key EK assigned to the individual person which links the ownership to the individual person or patient. The individual person might upload additional data to the application account interface 20 of the medical institute A or to the database 80 directly or to his/her own application account interface 70. The available data of the patient of the medical institute being a participant A of the cloud platform can then be published to the platform modules 50, 60.

With the data modelling module 230, 730 an individual can create a bundle of data (e.g. all his/her images including health records from his/her smart watch) or can add an age group and/or past examination results to make the data more attractive and/or relevant for other participants of the cloud platform. The individual gets tokens via the digital token account module 250 of medical institute A when the data associated with the individual or patient of medical institute A is used and/or downloaded.

By introducing an incentive system which scales data and is not limited by data size or data count the availability of data can be increased. The individual or patient is the owner of his/her data records and can decide how to emploit it. Especially, the data can be anonymized which is an important aspect for healthcare data.

An interested participant who gets the received data can use it for increasing accuracy and quality of data driven diagnostics or even to provide medical services/advice to the individuals or patients having contributed to the expanded data basis (based on their e.g. Big Data analytics). Especially such data can be used in the development processes for new drugs and clinical trials for the approval of the drugs. Approving authorities such as the FDA (Food and Drug Administration) can use the concept of receiving data from a plurality of participants of the cloud platform as they could get access to a huge amount of data provided by individual patients. At the moment the FDA receives most of the data from the pharmaceutical industry, but by using the method of the present invention they can get further data from individuals/patients directly. The data of a complex group of individuals can be combined and mapped in the data modelling module 230, 330, 730 according to the specific needs of the participants A, B, C, comprising the application account interfaces 20, 30, 70, ....

The present invention enables to free the data by using a secure data modelling module (protocols) 230, 330, 730 and can support common healthcare interoperability standards. A decentralised and secure data storage, controlled by the patients of the participating institutes or organisations, can be established by the present invention. Instead of private data access being controlled only by institutions, the individual or patient has the possibility to get control over his/her own data and can share his/her discrete medical records with other individuals, groups and institutions as participants of the cloud platform processing system 10.

Furthermore, by the method and system of the present invention a remote patient monitoring of patients as cloud platform participants is possible. Health sensors are becoming increasingly prevalent, both consumer grade and medical grade. Data from these sensors may provide greater insight into the patient's current health state in between clinic visits. This is particularly useful for a chronic disease, where deterioration may be identified sooner, or in medical trials where response may be monitored with higher granularity.
The data modelling module 230, 330, 730 can help to securely stream these data to a central or distributed database 80 which is preferably a permissionless ledger like a tangle or a blockchain. The ledger may also be used to record the security of assets, in particular medical devices like smart syringes and electronic autoinjectors, proving that they have been updated to the latest most secure internal software (firmware) .

By the method of the present invention an improvement regarding health data exchange is enabled as patient data can be transferred securely between hospitals as the owners of application account interfaces 20, 30, 70. Encrypted streams of data can carry either granular data about a patient or their entire health record. The inbuilt token transaction system also allows charging for these streams of data, so that institutions as platform participants can easily perform data transfer automatically.

The protocols for the data modelling modules 230, 330 and 730 are combined with a secure streaming of the data to the database 80 which can be used to form the basis for a distributed healthcare information exchange.

Furthermore, the data integrity in clinical research can be improved. Clinical research is reliant on the integrity of data collection. The method and system of the present invention can be used to provide integrity of research data. Due to the scalability of the data sharing and token transfer it is possible to record granular real world data in a continuous manner so that real world evidence for drugs can become a further important pillar in such a digital healthcare environment and may save costs for clinical trials.

According to the present invention data platform participants A, B, C, ... can advertise their data at the platform modules 50, 60 of the cloud platform 40. In a data modelling module 230, 330 and 730 the data can be organized in a way to make them more relevant to other participants. This can comprise the bundling of data generated by two or more data sources 24, 26 but as well a complete complex production process. The digital account module 250, 350, 750 implemented in the application account interface 20, 30, 70 can be used to carry out a token transfer and/or clearing of the shared data.

Furthermore, each data modelling module 230, 330, 730 can comprise mappings for terms of data elements as well as transformation rules. In a possible embodiment, an application semantic model can be stored in the data modelling module 230, 330, 730 and can comprise an ontological model. The mappings for terms of data elements can comprise for instance mappings between data source terms of data sources, mappings between event source terms of event sources and mappings between other information terms.

## Claims

1. A computer implemented method for providing a secure data transfer between application account interfaces (20; 30; 70) of participants (A; B; C) in a processing system (10), the method comprising the steps of:
(a) modelling (S1) by a data modelling module (230) of a first application account interface (20) data of a participant (A) of said processing systems (10);
(b) streaming (S2) the modelled data from the data modelling module (230) of the first application account interface (20) directly or indirectly via a database (80) of said processing system (10) to a data storage module (310; 710) of a second application account interface (30; 70) of another participant (B; C) of said processing system (10) in response to a received request, REQ; and;
(c) transferring (S3) tokens from a token account module of the second application account interface (30; 70) directly or indirectly via a token exchange unit (82) of said processing system (10) to a token account module (250) of the first application account interface (20) of said processing system (10).

2. The computer implemented method according to claim 1, wherein the first application account interface (20) sends an information message including metadata describing the data modelled by the data modelling module (230) of the first application account interface (20) to at least one platform interface module (50; 60) of a cloud platform (40) of said processing system (10) to offer the modelled data for sharing with other participants of said processing system (10).

3. The computer implemented method according to claim 2, wherein the metadata of the information message describing data modelled by the data modelling module (230) of the first application account interface (20) is evaluated automatically to determine whether the respective modelled data is relevant to at least one other participant of said processing system (10) .

4. The computer implemented method according to claim 3, wherein if data modelled by the data modelling module (230) of the first application account interface (20) is determined to be relevant and/or demanded by another participant of said processing system (10) a corresponding request, R, is generated and the modelled data is streamed to the second application account interface (30; 70) of the identified other participant in exchange of tokens transferred directly or indirectly from the token account module (350; 750) of the second application account interface (30; 70) to the token account module (250) of the first application account interface (20).

5. The computer implemented method according to any of the preceding claims 1 to 4,
wherein modelling (S1) of the data comprises combining and/or preprocessing data derived from assets of a platform participant of said processing system (10) and/or
encrypting the data derived from assets of the respective participant of said processing system (10) using an encryption key (EK) associated with the respective platform participant and/or associated with the respective asset of the platform participant.

6. The computer implemented method according to any of the preceding claims 1 to 5,
wherein the transfer of tokens from the token account module (350; 750) of the second application interface (30; 70) to the token account module (250) of the first application account interface (20) has been accomplished a decryption key (DK) is supplied automatically to the second application account interface (30; 70) and used to decrypt the data having been modelled and encrypted by the data modelling module (230) of the first application account interface (20) and streamed directly or indirectly to the data storage module (310; 710) of the second application account interface (30; 70) .

7. The computer implemented method according to any of the preceding claims 1 to 6, wherein the database (80) comprises a central database or a distributed ledger.

8. The computer implemented method according to claim 7, wherein the distributed ledger is configured as a distributed permissionless ledger, in particular a IOTA™ tangle and/or a blockchain.

9. The computer implemented method according to any of the preceding claims 1 to 8, wherein the internal platform interface module (50; 60) comprises an application logic (53; 63) for receiving requests and/or comparing requests with metadata carried in information messages.

10. The computer implemented method according to claim 6, wherein the received decryption key (DK) is stored in the second application account interface (30; 70) and used for decrypting the encrypted data received from the first application account interface (20) and/or received from the database (80) of said processing system (10).

11. The computer implemented method according to claim 10, wherein the decrypted data is stored and used as training data to train a machine learning data model implemented on a processor connected to the second application account interface (30; 70).

12. The computer implemented method according to claim 11, wherein the metadata comprises tags and/or annotations provided to label the training data used for supervised learning of the machine learning data model.

13. The computer implemented method according to any of the preceding claims 1 to 12, wherein each data modelling module (230; 330; 730) comprises an application semantic model used for mapping of terms of data elements, in particular data source terms, event source terms and/or for mappings between different information terms.

14. A data sharing processing system (10) for sharing data between platform participants (A; B; C) of said data sharing processing system (10),
said data sharing processing system (10) comprising for each platform participant (A, B, C) an application account interface (10, 20, 70) connected to a cloud computing platform (40),
said application account interface (10, 20, 70) including:
a data modelling module (230, 330, 730) adapted to model data of a platform participant and to stream the modelled data directly or indirectly via a database (80) of said data sharing processing system (10) to a data storage module (210, 310, 710) of another application account interface (10, 20, 70) of said data sharing processing system (10) and
including a token account module (250, 350, 750) adapted to receive directly or indirectly via a token exchange unit (82) of said data sharing processing system (10) tokens from a token account module (250, 350, 750) of the other application account interface (10, 20, 70) of said data sharing system (10) .

15. The data sharing processing system (10) according to claim 14,
used to share data between automation systems of different platform participants.

16. The data sharing processing system (10) according to claim 14,
used to share health related data between a plurality of platform participants.
